# FASCICULE DE BREVET EUROPEEN

(11) **EP 2 365 892 B1**
(45) Date de publication et mention de la délivrance du brevet: **29.05.2013**
(21) Numéro de dépôt: 09760856.6
(22) Date de dépôt: 25.11.2009
(51) Int. Cl.: B23Q 11/10, B23B 39/00

(54) **PORTE OUTILS COMPORTANT DES MOYENS DE REFROIDISSEMENT**
KÜHLMITTEL ENTHALTENDER WERKZEUGHALTER
TOOL HOLDER INCLUDING COOLING MEANS

(30) Priorité: 28.11.2008 FR 0858125
(43) Date de publication de la demande: 21.09.2011
(73) Titulaire: European Aeronautic Defence and Space Company EADS France, 75016 Paris (FR)
(72) Inventeur: DUNANT-CHATELLET, Clément, F-92160 Antony (FR); THOMAS, Bruno, F-75015 Paris (FR)
(74) Mandataire: Maupilier, Didier
(86) Numéro de dépôt international: PCT/EP2009/065855
(87) Numéro de publication internationale: WO 2010/060936

(56) Documents cités:
- DE-A1- 3 306 246
- US-A- 3 880 354
- US-A- 5 402 938
- US-A1- 2007 077 132

## Description

La présente invention concerne un porte outils comportant des moyens de refroidissement notamment par soufflage d'air. Un porte-outil comportant des moyens de refroidissement est par exemple connu du document US 3,880,354.

Il est connu de refroidir des outils de coupe ou de perçage pendant leur utilisation, voir par exemple US 2007/0077132.

Le refroidissement doit s'effectuer au niveau de l'outil de manière à réduire les températures atteintes au niveau de l'outil contribuant aux phénomènes d'endommagement de l'outil sous la combinaison des efforts résultant de son introduction dans la matière, du collage de copeaux sur goujures et/ou listel contribuant au phénomène de bourrage des copeaux.

Ce refroidissement de l'outil doit également contribuer à une réduction de la température du copeau, qui plus froid pourra se fractionner plus facilement, contribuant donc encore à une réduction du phénomène de bourrage des copeaux.

Actuellement, le refroidissement des outils est réalisé par l'utilisation d'une huile, d'un mélange d'huile et d'air pouvant se trouver à l'état de brouillard d'huile, voire par un soufflage d'air sec au travers de moyens embarqués dans les éléments constitutifs du système de fixation de l'outil sur un porte outils.

Cependant pour des matériaux à faible chaleur spécifique et faiblement conducteurs tels que les matériaux composites à matrice organique ou les métaux durs, aciers ou alliage de titane, le soufflage d'air sec n'est pas suffisant pour contrôler les niveaux de température issus du frottement de l'outil avec les matériaux. Il est nécessaire de réduire la température de plusieurs centaines de degrés pour réaliser l'opération sans endommagement de la matière, dans des conditions opératoires sans danger, notamment en évitant les risques d'inflammation, et économiquement acceptables.

Il est à noter que le soufflage d'air sec au centre de l'outil ne se montre pas suffisamment efficace dans l'usinage des matériaux durs tels que les alliages de titane, l'inconel, les composites à matrice organique ou autres du fait de leur faible conductivité thermique.

La circulation d'air par les canaux de lubrification ne saurait être une solution de refroidissement viable du fait de la limitation du diamètre des trous de lubrification pour un diamètre d'outil donné ce qui fait que le débit maximal de fluide sortant est limité par la géométrie des canaux.

Cette caractéristique de non conduction de la chaleur par le matériau a pour effet un emmagasinement de la chaleur au sein de l'outil, emmagasinement partiellement responsable de l'usure de l'outil, l'accroissement de la température de l'outil, en plus d'endommager l'outil, présentant un danger opératoire comme la rupture de l'outil du fait de trop importantes contraintes thermiques ou l'inflammation du matériau usiné.

Il existe donc un besoin d'abaisser la température de l'outil de plusieurs centaines de degrés afin de libérer les calories présentes dans l'outil.

C'est également dans un souci d'accroissement de la productivité que la température se doit d'être diminuée.

Le besoin est donc d'évacuer les calories emmagasinées dans l'outil durant sa phase de fonctionnement par un moyen embarqué dans les éléments constitutifs de son système d'attachement. Cette évacuation d'énergie sous forme de chaleur doit intervenir au niveau de l'outil dans son intégralité de sorte à faire chuter les températures de coupe des outils qui sont majoritairement responsables des phénomènes d'usures comme la diffusion à chaud des atomes du matériau dans les matériaux à outil et vice-versa ou de problèmes de coupe tels que l'adhésion à chaud de copeaux dans les goujures et/ou sur les listels responsable des bourrages copeaux.

Pour fournir un refroidissement suffisant dans le cadre d'un usinage à sec la présente invention prévoit d'utiliser un amplificateur de débit à effet Coanda.

L'effet Coanda est basé sur le postulat suivant: lorsqu'un fluide en écoulement rencontre un obstacle, il en épouse la surface avant de s'en détacher avec une trajectoire différente de celle qu'il avait en amont. Cette propriété est utilisée pour entraîner un grand volume de fluide à partir d'une source de fluide à forte pression.

Un exemple de réalisation d'amplificateur de débit à effet Coanda est donné par le document US 5 402 938.

Dans ce cadre, la présente invention propose un dispositif de refroidissement d'un outil tournant selon la revendication 1.

La source d'air sous pression est préférablement le réseau d'air sous pression de l'atelier dans lequel se trouve la machine.

Selon l'invention, l'amplification de débit est faite sur de l'air ambiant aspiré au moyen d'ouvertures ménagées dans le capotage, et
le capotage comporte un corps fixe recevant un embout conformé en tuyère entourant l'outil.

Préférablement le dispositif comporte un moyen de réglage de la dimension d'une rainure entre le corps fixe et l'embout adaptée à agir sur le rapport d'amplification du flux d'entrée au regard du flux de sortie de l'amplificateur.

Selon un mode de réalisation particulier complémentaire ou alternatif, le dispositif comporte des moyens d'amenée d'un fluide dans des canaux internes à l'outil, les moyens d'amenée comprenant un passage dans un joint tournant entre le capotage et le porte outil.

Préférablement, le fluide traversant le joint tournant est distribué dans les canaux de lubrification de l'outil et sort au niveau des lèvres de l'outil.

Les moyens d'amenée fluide comportent notamment un raccord et une traversée au niveau du capotage.

Selon un premier mode de réalisation, le fluide est un second flux d'air qui est avantageusement pris sur le réseau d'air sous pression de l'atelier dans lequel se trouve la machine.

Selon un second mode de réalisation le fluide est un fluide est un fluide à transformation de phase dont la vaporisation est endothermique amené dans les canaux de lubrification de l'outil sous forme liquide et se vaporisant dans les goujures de l'outil au niveau de la pointe de l'outil.

Le fluide est avantageusement un fluide fluoré et plus particulièrement un fluide à base de métoxynonafluorobutane.

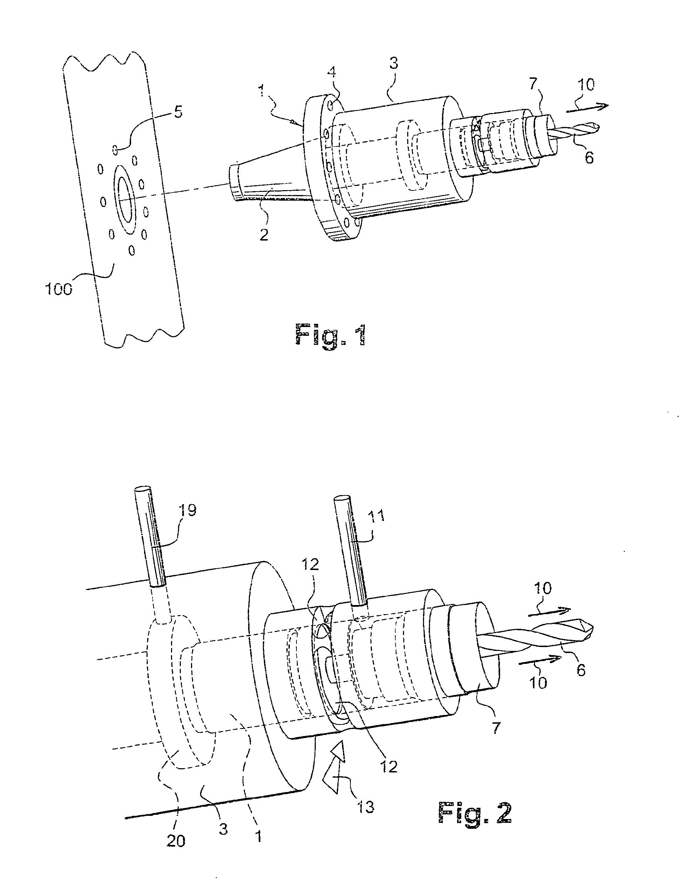

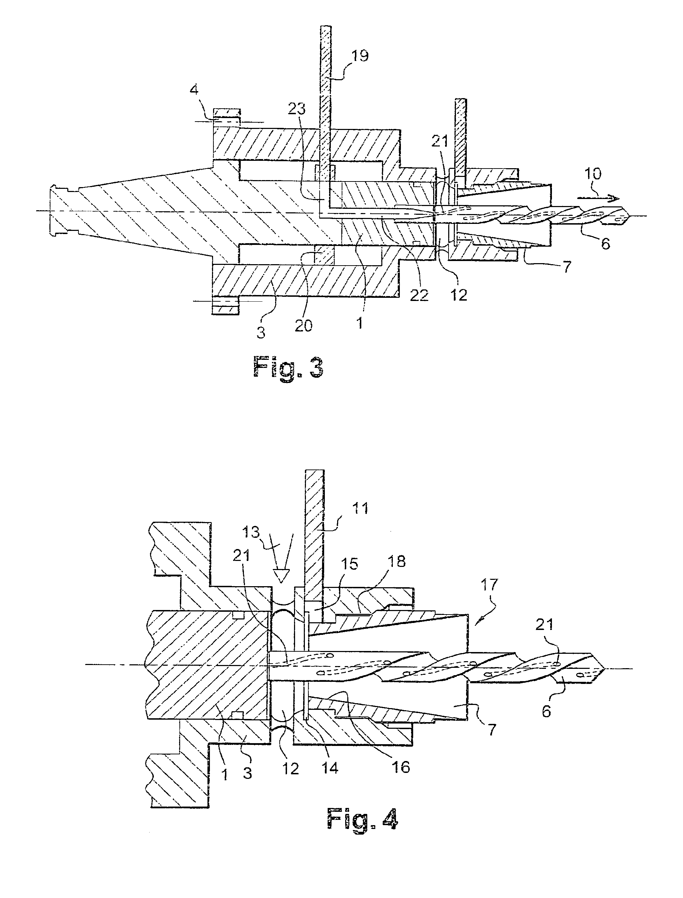

D'autres caractéristiques et avantages de l'invention seront apparents à la lecture de la description qui suit d'un exemple de réalisation non limitatif de l'invention accompagné des dessins qui représentent:
en figure 1: une vue en perspective en transparence d'un porte outil selon l'invention,
en figure 2: une en perspective en transparence vue d'un détail agrandi du porte outil de la figure 1,
en figure 3: une vue de côté du porte outil de la figure 1,
en figure 4: un agrandissement d'un détail de la figure 3.

L'invention est ici décrite dans le cadre d'un mandrin porte outil de perçage mais ce principe peut être utilisé pour des outils de coupe.

Le porte outil 1 représenté à la figure 1 est constitué par un mandrin pourvu d'un emmanchement conique 2 pour s'insérer dans un dispositif d'entraînement d'une machine d'usinage 100.

Le porte outil est entouré d'un capotage 3 représenté en transparence pourvu de moyens 4 de réception de moyens de fixation tels que des vis reçues dans des trous filetés 5 de la machine 100.

L'outil 6 dépasse du capotage 3 par une ouverture frontale réalisée dans un embout 7 monté dans le capotage 3

Le dispositif de refroidissement par soufflage d'air de l'invention comprend des moyens de génération d'un premier flux d'air 10, externe à l'outil et autour de l'outil, à haut débit continuellement renouvelé réalisé au moyen d'un dispositif amplificateur de débit à effet Coanda réalisé dans le capotage 3 fixé sur la machine 100.

Selon la figure 2, le flux d'air 10 généré par l'amplificateur autour du porte outil est généré à partir d'une source d'air sous pression, notamment le réseau d'air sous pression de l'atelier dans lequel se trouve la machine reliée par un tuyau 11 raccordé sur le capotage au niveau de l'amplificateur de débit.

L'amplification de débit est faite sur de l'air ambiant 13 aspiré au moyen d'ouvertures 12 ménagées dans le capotage.

L'amplificateur de débit agrandi en figure 4 est constitué au moyen d'une rainure 14 entre une chambre 15 d'arrivée de l'air comprimé et la paroi interne 16 de l'embout 7 conformé en tuyère dont le profil interne est conique et s'évase en direction de la pointe de l'outil 6.

L'embout 7 est reçu dans un corps fixe du capotage 3 autour de l'outil 6. Pour le fonctionnement de l'amplificateur Coanda, il y a lieu de se référer au document US 5 402 938 précité sachant que la dépression créée au niveau du rayon de courbure entre la paroi interne 16 et la rainure 14 aspire l'air ambient par les ouvertures 12, un fort débit d'air étant obtenu au niveau de la sortie 17 de l'embout 7.

Le dispositif comporte un moyen de réglage de la dimension de la rainure 14 entre le corps fixe et l'embout adaptée à agir sur le rapport d'amplification du flux d'entrée au regard du flux de sortie de l'amplificateur. Ce moyen de réglage est par exemple un filetage 18 entre l'embout et le corps du capotage 3 qui permet d'enfoncer plus ou moins l'embout dans le corps.

Ainsi, selon l'invention, l'amplificateur de débit est alimenté par l'air comprimé de l'usine auquel il est relié et par aspiration de l'air ambiant.

L'amplificateur de débit est entièrement intégré dans le capotage autour du porte outil et se trouve au plus près de l'outil afin de permettre une régénération optimale de l'air.

L'amplificateur utilise l'air comprimé de l'usine afin de créer une dépression par l'arrivée d'air sous pression dans la rainure circulaire 14 qui provoque une dépression au centre de l'amplificateur de laquelle résulte une aspiration de l'air ambiant.

C'est donc le cumul de ces deux flux d'air qui permet d'augmenter le débit de sortie de l'amplificateur vis-à-vis de son débit d'entrée.

En complément des moyens de génération du premier flux d'air, le dispositif selon l'exemple comporte des moyens d'amenée d'un second flux d'air dans des canaux internes à l'outil, les moyens d'amenée comprenant un passage d'air comprimé dans un joint tournant 20 entre le capotage 3 et le porte outil 1 comme représenté en figure 3.

L'air comprimé est distribué dans les canaux 21 de lubrification de l'outil, par exemple par des canaux radiaux 23 puis un canal longitudinal 22 et sort au niveau des lèvres de l'outil.

Les moyens d'amenée du second flux d'air comportant en outre un raccord 19 et une traversée au niveau du capotage débouchant dans le joint tournant 20 et le second flux d'air est pris sur le réseau d'air sous pression de l'atelier dans lequel se trouve la machine.

L' amplificateur sera utilisé de manière continue dès lors que l'outil est animé d'un mouvement de rotation ou/et de translation, qu'il soit hors matière, pour obtenir un refroidissement intégral de l'outil entre deux usinage, ou dans la matière ce qui permet d'obtenir un refroidissement du corps de l'outil, des copeaux et de l'environnement de coupe.

A cet effet de refroidissement se cumule un effet de nettoyage de l'espace de travail de l'outil.

En effet, le soufflage d'air à haut débit permet de chasser les copeaux et d'éviter ainsi les coincements éventuels de ces derniers à l'interface outil /zone d'usinage.

Il permet, de plus, de maintenir le matériau usiné à une température basse limitant, de ce fait, les potentielles évolutions de la microstructure du matériau. L'opérateur a pour seule manipulation la mise en route de l'air comprimé en début de cycle d'usinage et son extinction en fin de cycle.

Les utilisations potentielles de ce système se déclinent suivant 2 formes.

La première est de diminuer les températures de l'outil et de son environnement permettant ainsi de réduire les endommagements du couple outil / matériau usiné, de diminuer les phénomènes de collage des copeaux sur l'outil et d'éjecter les copeaux de l'espace de travail afin d'éviter les coincements ou rayures de ces derniers dans l'espace de coupe. La seconde est d'améliorer la productivité du procédé en augmentant les vitesses (circonférentielles et/ou de translation) de l'outil au sein de la matière, augmentation possible du fait de la diminution de température obtenue au moyen du dispositif de l'invention.

Ce principe de refroidissement trouvera son application dans tous les procédés de fabrication utilisant un outil rotatif qui évolue dans un matériau susceptible de créer un échauffement par frottement d'un outil sur un matériau.

La diminution de la température apportée par l'invention présente également l'intérêt de réduire la température des copeaux qui, plus froids, sont plus rigides et donc plus facilement fractionnables ce qui réduit les risques de bourrage des copeaux.

L'amplificateur de débit d'air de l'invention permet également de réduire les risques de bourrage et de collage des copeaux du fait de la haute pression du flux d'air qu'il génère qui permet le dégagement des copeaux pendant le perçage et entre les trous. L'invention est particulièrement adaptée dans le cadre d'un usinage à sec, c'est-à-dire sans lubrifiant, et permet d'obtenir une meilleure tenue à l'usure des outils de coupe en service.

Dans le cas de l'utilisation d'un fluide à transformation de phase dont la vaporisation est endothermique le fluide est injecté liquide au niveau des moyens d'amenée comprenant le raccord 19, la traversée au niveau du capotage débouchant dans le joint tournant 20 entre le capotage 3 et le porte outil 1 comme représenté en figure 3.

Le fluide est distribué dans les canaux 21 de lubrification de l'outil, par exemple par des canaux radiaux 23 puis un canal longitudinal 22 et sort au niveau des lèvres de l'outil au travers des goujures de l'outil. Sous l'échauffement dû au travail de l'outil, le fluide se vaporise au niveau de la pointe de l'outil et absorbe la chaleur.

Ce moyen de refroidissement est utilisé pour un refroidissement local de la pointe de l'outil et du corps de l'outil.

Il est avantageusement complété par le dispositif à amplificateur de débit qui a alors pour effet principal de nettoyer la zone de travail en particulier en soufflant les copeaux.

En fonction des matériaux usinés on peut envisager d'utiliser soit l'un soit l'autre soit les deux dispositifs de refroidissement combinés.

## Revendications

1. Dispositif de refroidissement d'un outil tournant (6) monté sur une machine (100), ce dispositif comprenant
- un porte outil recevant l'outil tournant (B) et **caractérisé en ce qu'**il comprend
- un capotage (3) muni d'une ouverture centrale axiale de réception du porte outil et de l'outil tournant (6),
- un embout (7) fixé sur le capotage et conformé en tuyère,
- des moyens de génération d'un premier flux d'air (10), à haut débit continuellement renouvelé réalisé au moyen d'un dispositif amplificateur de débit à effet Coanda , et **en ce que** ledit dispositif amplificateur est intégré dans le capotage (3) autour du porte outil, ledit capotage comportant des ouvertures (12) d'aspiration d'air ambiant, ledit dispositif amplificateur étant relié à une source d'air sous pression et comprenant une chambre (15) d'arrivée d'air comprimé et une rainure (14) entre la chambre (15) d'arrivée d'air comprimé et une paroi interne (16) de l'embout (7).

2. Dispositif de refroidissement selon la revendication 1 **caractérisé en ce que** la source d'air sous pression est le réseau d'air sous pression de l'atelier dans lequel se trouve la machine.

3. Dispositif de refroidissement selon la revendication 1 ou 2 **caractérisé en ce qu'**il est adapté à amplifier le débit sur de l'air ambiant (13) aspiré au moyen des ouvertures (12) ménagées dans le capotage (3).

4. Dispositif de refroidissement selon l'une quelconque des revendications précédentes **caractérisé en ce que** le capotage (3) comporte un corps fixe recevant ledit embout (7) conformé en tuyère entourant l'outil.

5. Dispositif de refroidissement selon l'une quelconque des revendications précédentes **caractérisé en ce qu'**il comporte un moyen de réglage (18) de la dimension de la rainure (14) adapté à agir sur le rapport d'amplification du flux d'entrée au regard du flux de sortie de l'amplificateur.

6. Dispositif de refroidissement selon l'une quelconque des revendications précédentes **caractérisé en ce que** le porte outil est muni de moyens d'amenée d'un fluide dans des canaux (21) internes à l'outil, les moyens d'amenée comprenant un passage dans un joint tournant (20) entre le capotage (3) et le porte outil (1) et un canal (22) dans le porte outil.

7. Dispositif de refroidissement selon la revendication 6 **caractérisé en ce que** le fluide traversant le joint tournant (20) peut être distribué dans les canaux (21) de lubrification de l'outil et peut sortir au niveau des lèvres de l'outil.

8. Dispositif de refroidissement selon la revendication 6 ou 7 **caractérisé en ce que** les moyens d'amenée fluide comporte un raccord (19) et une traversée au niveau du capotage.

9. Dispositif de refroidissement selon l'une quelconque des revendications 6 à 8 **caractérisé en ce que** le fluide est un second flux d'air.

10. Dispositif de refroidissement selon la revendication 9 **caractérisé en ce que** le second flux d'air est pris sur le réseau d'air sous pression de l'atelier dans lequel se trouve la machine.

11. Dispositif de refroidissement selon l'une quelconque des revendications 6 à 8 **caractérisé en ce que** le fluide est un fluide à transformation de phase dont la vaporisation est endothermique.

12. Dispositif de refroidissement selon la revendication 11 **caractérisé en ce que** le fluide est un fluide fluoré.

13. Dispositif de refroidissement selon la revendication 12 **caractérisé en ce que** le fluide est un fluide à base de méthoxynonafluorobutane.

## Patentansprüche

1. Vorrichtung zum Kühlen eines auf eine Maschine (100) montierten, drehenden Werkzeugs (6), wobei diese Vorrichtung enthält
- einen Werkzeughalter, der das drehende Werkzeug (6) aufnimmt, und
**dadurch gekennzeichnet, dass** sie enthält
- eine Verkleidung (3), die mit einer axialen zentralen Öffnung zur Aufnahme des Werkzeughalters und des drehenden Werkzeugs (6) versehen ist,
- einen Aufsatz (7), der an der Verkleidung befestigt und wie eine Düse ausgebildet ist,
- Einrichtungen zur Erzeugung eines ersten Luftstroms (10) mit ständig erneuertem hohem Durchsatz, der mittels einer Durchsatzverstärkungsvorrichtung mit Coanda-Wirkung erzeugt wird,
und dass die Verstärkungsvorrichtung in die Verkleidung (3) um den Werkzeughalter integriert ist, wobei die Verkleidung Öffnungen (12) zum Ansaugen von Umgebungsluft aufweist, wobei die Verstärkungsvorrichtung mit einer Druckluftquelle verbunden ist und eine Druckluft-Zufuhrkammer (15) und eine Rille (14) zwischen der Druckluft-Zufuhrkammer (15) und einer Innenwand (16) des Aufsatzes (7) enthält.

2. Kühlvorrichtung nach Anspruch 1, **dadurch gekennzeichnet, dass** die Druckluftquelle das Druckluftnetz der Werkstatt ist, in der sich die Maschine befindet.

3. Kühlvorrichtung nach Anspruch 1 oder 2, **dadurch gekennzeichnet, dass** sie geeignet ist, um den Durchsatz an angesaugter Umgebungsluft (13) mittels der in der Verkleidung (3) ausgebildeten Öffnungen (12) zu verstärken.

4. Kühlvorrichtung nach einem der vorhergehenden Ansprüche, **dadurch gekennzeichnet, dass** die Verkleidung (3) einen ortsfesten Körper aufweist, der den das Werkzeug umgebenden, als Düse gestalteten Aufsatz (7) aufnimmt.

5. Kühlvorrichtung nach einem der vorhergehenden Ansprüche, **dadurch gekennzeichnet, dass** sie eine Einrichtung (18) zum Regeln der Abmessung der Rille (14) aufweist, die auf das Verstärkungsverhältnis des Eingangsstroms gegenüber dem Ausgangsstrom des Verstärkers einwirken kann.

6. Kühlvorrichtung nach einem der vorhergehenden Ansprüche, **dadurch gekennzeichnet, dass** der Werkzeughalter mit Zufuhreinrichtungen eines Fluids in im Inneren des Werkzeugs befindliche Kanäle (21) versehen ist, wobei die Zufuhreinrichtungen einen Durchgang in einer Drehdichtung (20) zwischen der Verkleidung (3) und dem Werkzeughalter (1) und einen Kanal (22) im Werkzeughalter enthalten.

7. Kühlvorrichtung nach Anspruch 6, **dadurch gekennzeichnet, dass** das die Drehdichtung (20) durchquerende Fluid in den Kanälen (21) zum Schmieren des Werkzeugs verteilt werden und im Bereich der Lippen des Werkzeugs austreten kann.

8. Kühlvorrichtung nach Anspruch 6 oder 7, **dadurch gekennzeichnet, dass** die Fluidzufuhreinrichtungen einen Anschluss (19) und eine Durchführung im Bereich der Verkleidung aufweisen.

9. Kühlvorrichtung nach einem der Ansprüche 6 bis 8, **dadurch gekennzeichnet, dass** das Fluid ein zweiter Luftstrom ist.

10. Kühlvorrichtung nach Anspruch 9, **dadurch gekennzeichnet, dass** der zweite Luftstrom vom Druckluftnetz der Werkstatt abgezogen wird, in der sich die Maschine befindet.

11. Kühlvorrichtung nach einem der Ansprüche 6 bis 8, **dadurch gekennzeichnet, dass** das Fluid ein Fluid mit Phasenumwandlung ist, dessen Verdampfung endothermisch ist.

12. Kühlvorrichtung nach Anspruch 11, **dadurch gekennzeichnet, dass** das Fluid ein fluoriertes Fluid ist.

13. Kühlvorrichtung nach Anspruch 12, **dadurch gekennzeichnet, dass** das Fluid ein Fluid auf der Basis von Methoxynonafluorbutan ist.

## Claims

1. A cooling device for a rotating tool (6) mounted on a machine (100), this device comprising:
- a tool holder receiving the rotating tool (6) and **characterized in that** it comprises :
- a hooding (3) provided with an axial central opening for receiving the tool holder and the rotating tool (6),
- a tip (7) secured on the hooding and conformed as a nozzle,
- means for generating a first air stream (10), at a high flowrate continuously renewed, carried out by means of a flow amplifier device based on the Coanda effect, and **in that** said flow amplifier device is integrated into the hooding (3) around the tool holder, said hooding including openings (12) for drawing ambient air, said flow amplifier device being connected to a pressurized air supply and comprising a compressed air inlet chamber (15) and a groove (14) between the compressed air inlet chamber (15) and an internal wall (16) of the tip (7).

2. The cooling device according to claim 1 **characterized in that** the pressurized air supply is the pressurized air network of the workshop in which is located the machine.

3. The cooling device according to the claim 1 or 2, **characterized in that** it is adapted to amplify the flow of ambient air (13) drawn by means of the openings (12) provided in the hooding (3).

4. The cooling device according to any of the preceding claims, **characterized in that** the hooding (3) includes a fixed body receiving said tip (7) conformed as a nozzle surrounding the tool.

5. The cooling device according to any of the preceding claims, **characterized in that** it comprises a means (18) for adjusting the groove (14) size, that is adapted to act on the increase of the inlet to outlet flow ratio of the flow amplifier.

6. The cooling device according to any of the preceding claims, **characterized in that** the tool holder is provided with means for supplying a fluid into tool internal channels (21), the supplying means comprising a passage within a rotary seal (20) between the hooding (3) and the tool holder (1) and a channel (22) into the tool holder.

7. The cooling device according to claim 6, **characterized in that** the fluid flowing through the rotary seal (20) can be distributed into the tool lubricant channels (21) and can flow out at the tool lips.

8. The cooling device according to claim 6 or 7, **characterized in that** the fluid supplying means includes a connector (19) and a crossing member at the hooding.

9. The cooling device according to any of claims 6 to 8, **characterized in that** the fluid is a second air stream.

10. The cooling device according to claim 9 **characterized in that** the second air stream is taken from the pressurized air network of the workshop in which is located the machine.

11. The cooling device according to any of claims 6 to 8, **characterized in that** the fluid is a phase transformation fluid whose the vaporization is endothermic.

12. The cooling device according to claim 11, **characterized in that** the fluid is a fluorinated fluid.

13. The cooling device according to claim 12, **characterized in that** the fluid is a fluid containing méthoxynonafluorobutane.
